# EUROPÄISCHE PATENTSCHRIFT

(11) **EP 0 801 868 B1**
(45) Veröffentlichungstag und Bekanntmachung des Hinweises auf die Patenterteilung: **08.01.2003**
(21) Anmeldenummer: 95926961.4
(22) Anmeldetag: 20.07.1995
(51) Int. Cl.: H04L 27/26, H04J 3/16

(54) **VERFAHREN ZUR ADAPTIVEN ZUWEISUNG DER ÜBERTRAGUNGSKAPAZITÄT EINES ÜBERTRAGUNGSKANALS**
METHOD FOR THE ADAPTIVE ASSIGNMENT OF THE TRANSMISSION CAPACITY OF A TRANSMISSION CHANNEL
PROCEDE D'AFFECTATION ADAPTATIVE DE LA CAPACITE DE TRANSMISSION D'UNE VOIE DE TRANSMISSION

(30) Priorität: 21.07.1994 DE 4425973
(43) Veröffentlichungstag der Anmeldung: 22.10.1997
(73) Patentinhaber: GRUNDIG Aktiengesellschaft, 90471 Nürnberg (DE)
(72) Erfinder: ZUMKELLER, Markus, D-71409 Schwaikheim (DE)
(86) Internationale Anmeldenummer: EP9502853
(87) Internationale Veröffentlichungsnummer: WO96003841

(56) Entgegenhaltungen:
- EP-A- 0 428 407
- EP-A- 0 643 537
- WO-A-94/10775
- GB-A- 2 132 860
- IEEE GLOBAL TELECOMMUNICATIONS CONFERENCE, Bd. 1, 2. - 5.Dezember 1991 NEW YORK, US, Seiten 331-338, BOLLA ET AL 'ADAPTIVE ACCESS CONTROL OF MULTIPLE TRAFFIC CLASSES IN ATM NETWORKS'
- FERNSEH UND KINOTECHNIK, Bd. 46, Nr. 9, September 1992 Seiten 559-561, 566 - 568, 570, KAYS 'DIGITALE FERNSEHUEBERTRAGUNG - SYSTEMKONZEPTE UND EINFUEHRUNGSCHANCEN' in der Anmeldung erwähnt

## Beschreibung

Die Erfindung betrifft ein Verfahren zur adaptiven Festlegung der Übertragungskapazität eines Übertagungskanals mit den im Oberbegriff des Anspruchs 1 angegebenen Merkmalen.

In der Zeitschrift Fernseh- und Kinotechnik 36. Jahrgang, Nr. 9/1992, S. 559-570, sind Systemkonzepte für eine digitale, terrestrische Fernsehübertragung beschrieben. Dabei werden die in einer Kamera erzeugten Fernsehsignale nach einer Analog/Digital-Wandlung einer Quellencodierung unterworfen, die dazu dient, die Datenrate des Signals stark zu reduzieren. Dem in der Datenrate reduzierten Signal werden im nächsten Schritt mittels eines Multiplexers digitale Zusatzinformationen hinzugefügt, wie beispielsweise digitale Audiosignale. Das so erhaltene Signal wird zur optimalen Anpassung des Signals an den zur Verfügung stehenden Kanal einer Kanalcodierung und -modulation zugeführt. Bei der Kanalcodierung wird dem Signal Redundanz hinzugefügt, um empfangsseitig Übertragungsfehler erkennen und korrigieren zu können. Durch die Kanalmodulation wird der erhaltene Datenstrom in ein 8 MHz-Band umgesetzt. Dieses kann nach einer Frequenzumsetzung beispielsweise über einen UHF-Kanal übertragen werden. Empfangsseitig erfolgt eine Umsetzung des HF-Signals in das Basisband, eine digitale Demodulation, eine Kanaldecodierung, eine Abtrennung der digitalen Zusatzinformation vom Fernsehsignal und eine Quellendecodierung.

Weiterhin ist aus der Veröffentlichung "DAB - Ein neues Hörrundfunksystem", von G. Plenge, erschienen in Rundfunktechnische Mitteilungen, Jahrg. 35 (1991), Heft 2, Seite 45 - 66, ein neues digitales Hörrundfunksystem bekannt. Dabei wird das Übertragungssignal beispielsweise nach dem MUSICAM-Verfahren quellencodiert und es werden Zusatzdaten, wie Verkehrsinformationen, zum Übertragungssignal hinzugefügt. Dies führt dazu, daß die Übertragungsbitrate zeitabhängig ist. Anschließend erfolgt die Modulation nach dem COFDM-Verfahren, welche eine Kanalcodierung sowie ein Zeit- und Frequenz-Interleaving beinhaltet.

In der WO 88/00417 ist ein Übertragungsverfahren für digitale Daten in einem Gleichwellennetz mit besonders guter Nutzung der Übertragungsbandbreite beschrieben. Die zu übertragenden Daten werden zunächst codiert, um Übertragungsfehler wieder korrigieren zu können. Anschließend erfolgt die Modulation der Daten. Dabei wird eine Vielzahl Trägerfrequenzen mit dem zu übertragenden Signal phasenmoduliert und die Trägerfrequenzen sowohl im Zeit- als auch im Frequenzbereich verwürfelt, um eine erhöhte Störsicherheit des Übertragungsverfahrens zu erreichen.

Aus der EP-A2-0 428 407 ist ein Verfahren zur adaptiven Festlegung der Bandbreite von zu übertragenden digitalen Signalen bekannt. Bei diesen handelt es sich um von Computern erzeugte Datensignale und um Sprachsignale, die im Rahmen von Telefongesprächen übertragen werden. Sollen neue, zusätzliche Telefongespräche aufgenommen werden, dann wird diesen neuen Telefongesprächen als Reaktion auf ein jeweiliges Anforderungssignal jeweils ein Zeitschlitz im Übertragungsrahmen, welcher eine Vielzahl von Zeitschlitzen aufweist, zugeteilt. Als Ausgleich dafür werden einem oder mehreren der zu übertragenden Datensignale Zeitschlitze weggenommen bzw. abgesprochen.

Die Aufgabe der Erfindung besteht darin, ein neues Verfahren zur Übertragung digitaler Audio- und/oder Videosignale anzugeben, bei dem auch bei einem zeitabhängigen Datenaufkommen die durch das Übertragungsverfahren bereitgestellte Übertragungskapazität optimal ausgenutzt wird.

Diese Aufgabe wird bei einem Verfahren mit den im Oberbegriff des Anspruchs 1 angegebenen Merkmalen durch die im kennzeichnenden Teil des Anspruchs 1 angegebenen Merkmale gelöst.

Vorteihafte Weiterbildungen sind den abhängigen Patentansprüchen zu entnehmen.

Bei dem beanspruchten Verfahren erfolgt in vorteilhafter Weise die Festlegung der Übertragungskapazität eines Übertragungskanals, in dem ein Rundfunkprogramm übertragen wird, in Abhängigkeit von der durch dieses Rundfunkprogramm benötigten Übertragungskapazität. Zur Empfängersynchronisation werden Informationen über diese Aufteilung in einem Steuerkanal übertragen.

Im folgenden wird die Erfindung anhand der Figuren beispielhaft erläutert.

Es zeigt:
- Fig. 1: einige Übertragungssignale mit unterschiedlichem Datenaufkommen,
- Fig. 2: einen möglichen Übertragungsrahmen, in dem mehrere Übertragungssignale mit unterschiedlichem Datenaufkommen im Zeitmultiplex übertragen werden und
- Fig. 3: eine mögliche Zuordnung der Empfangsdaten zu unterschiedlichen Übertragungssignalen.

Im folgenden wird das erfindungsgemäße Verfahren exemplarisch an einer Übertragung gemäß den DAB-Richtlinien erläutert. Seine vorteilhafte Anwendung ist jedoch bei allen Übertragungsverfahren für digitale Signale möglich, die einen Zeit- und/oder Frequenzmultiplex benutzen.

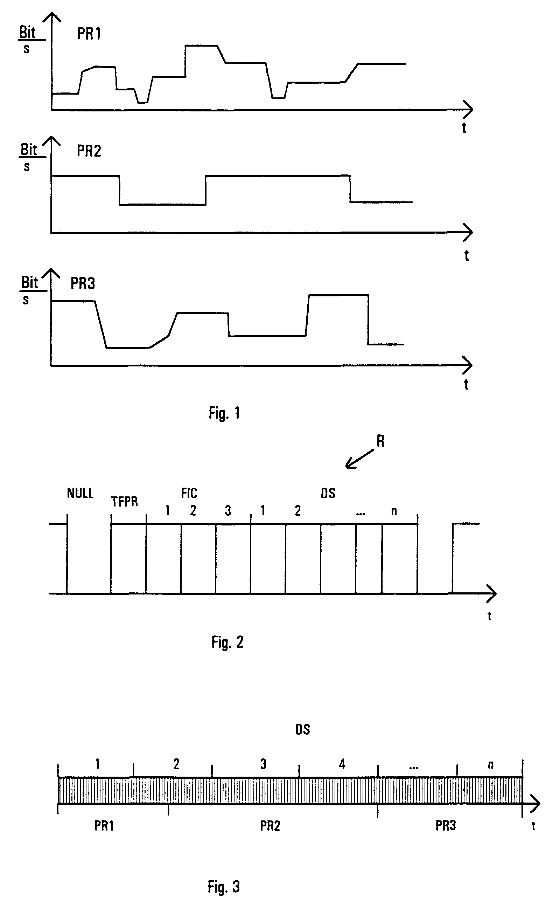

Fig. 1 zeigt das unterschiedliche Datenaufkommen der Signale PR1, PR2 und PR3, die in einem Zeitmultiplexrahmen R eines DAB-Übertragungssignals gemäß Fig. 2 übertragen werden. Die einzelnen Symbole weisen alle die gleiche Länge auf, die durch den Übertragungs-Mode festgelegt wird. Der Übertragungsrahmen beginnt mit einem Null-Symbol NULL, das eine erste grobe Synchronisation ermöglicht und in dem keine Daten übertragen werden. Danach folgt ein weiteres Synchronisationssymbol TFPR, das eine genauere Synchronisation ermöglicht. Die nächsten drei Symbole bilden den Fast-Information-Channel FIC, über den Informationen über die Aufteilung der einzelnen Datensymbole DS1, DS2, ..., DSn und über die in einem Datensymbol übertragenen Daten bezüglich der im Übertragungsrahmen übertragenen Signale PR1, PR2, PR3 übertragen werden.

Durch die im Fast-Information-Channel FIC übertragene Zuordnung der in den weiteren Daten-Symbolen DS1 bis DSn des Übertragungsrahmens übertragenen Daten zu einem Übertragungssignal PR1, PR2, PR3 ist im Empfänger die korrekte Demodulation und Decodierung möglich.

Die Erzeugung der über den Fast-Information-Channel FIC übertragenen Informationen zur Aufteilung der insgesamt vorhandenen Übertragungskapazität auf die einzelnen Übertragungssignale PR1, PR2, PR3 erfolgt dabei automatisch in bestimmten Zeitabständen im Sender. Als ein derartiger Zeitabstand wird beispielsweise eine Periode des Übertragungsrahmens R gewählt. Alternativ kann eine neue Aufteilung der Übertragungskapazität auf die einzelnen Übertragungssignale PR1, PR2, PR3 auch immer dann erfolgen, wenn sich das Datenaufkommen durch eines der Übertragungssignale PR1, PR2, PR3 geändert hat. Dadurch ist eine adaptive Anpassung der Übertragungskapazität möglich.

Falls dem Sender keine Information bezüglich der benötigten Übertragungskapazität zur Verfügung gestellt wird, generiert der Sender sich diese Information selbst. Das zu sendende Übertragungssignal wird dazu zunächst in einen Pufferspeicher eingeschrieben und beim Senden ausgelesen. Um Verzögerungen zu vermeiden darf die Übertragungsrate einen Mindestwert nicht unterschreiten, ansonsten wird die benötigte Übertragungskapazität in Abhängigkeit vom Füllstand dieses Pufferspeichers bestimmt. Die Übertragungskapazität muß mindestens so groß sein, daß der Pufferspeicher nicht überläuft.

Wird ermittelt, daß für ein erstes Übertragungssignal PR1 eine Übertragungskapazität von 700 kBit/s, für ein zweites PR2 eine von 1000 kBit/s und für ein drittes PR3 eine von 800 kBit/s von insgesamt 3000 kBit/s Übertragungskapazität des gesamten Übertragungsrahmens benötigt werden, besteht die Möglichkeit mittels der verbleibenden 500 kBit/s Übertragungskapazität den Füllstand eines oder mehrerer der Pufferspeicher zu reduzieren. Dadurch wird die gesamte Übertragungskapazität genutzt und für den Fall vorgesorgt, daß das Datenaufkommen kurzfristig größer ist als die Übertragungskapazität und sich die Füllstände der Pufferspeicher erhöhen.

Im Empfänger wird die im Fast-Information-Channel FIC übertragene Information ausgewertet. Es werden die in den Symbolen DS1 bis DSn des Übertragungsrahmens empfangenen Daten entsprechend der ausgewerteten Information in Empfangssignale PR1, PR2 und PR3 aufgeteilt, wie in Fig. 3 dargestellt. Das vom Benutzer ausgewählte Übertragungssignal wird anschließend ausgegeben. Ein erster Teil der Übertragungskapazität wird dem Übertragungssignal PR1 zugeordnet, ein zweiter Teil dem Übertragungssignal PR2 und ein dritter Teil dem Übertragungssignal PR3. Dies stellt die inverse Operation zur im Sender erfolgten Aufteilung der Übertragungskapazität dar. Die Ausnutzung der Übertragungskapazität erreicht dadurch einen sehr guten Wert, daß deren Aufteilung auf einzelne Übertragungssignale PR1, PR2, PR3 auf ein Bit genau erfolgen kann und weil im Fast-Information-Channel FIC nur wenige zusätzliche Daten übertragen werden müssen, z.B. die Nummer des Bits, ab dem ein neues Übertragungssignal beginnt.

Bei diesem Verfahren besteht die Möglichkeit eine Tarifierung in Abhängigkeit von der durch ein Übertragungssignal PR1, PR2, PR3 benutzten Übertragungskapazität vorzunehmen. Der Programmanbieter muß dann nur für die von dem jeweiligen Programm benutzte Ubertragungskapazität dem Netzbetreiber Gebühren bezahlen.

Weiterhin besteht die Möglichkeit, die Übertragungssignale PR1, PR2, PR3 verschlüsselt zu übertragen. Dadurch läßt sich ein unbefugtes Decodieren eines Übertragungssignals verhindern und eine individuelle Tarifierung realisieren. Die Realisierung kann darin bestehen, daß am Empfänger eine Codezahl eingegeben werden muß, die eine korrekte Decodierung des Empfangssignals ermöglicht. Alternativ besteht die Möglichkeit, daß einzelne Empfänger vom Sender zum Empfang eines speziellen Übertragungssignals freigeschaltet werden. Die für beide Verfahren benötigte Information kann dabei im Fast-Information-Channel FIC übertragen werden.

## Patentansprüche

1. Verfahren zur adaptiven Festlegung der einem OFDM-Übertragungssignal zugewiesenen Übertragungskapazität bei einem rahmenorientierten Mehrkanalübertragungsverfahren für Audio- und/oder Videosignale, wobei im Sender die für jedes zu übertragende Signal (PR1, PR2, PR3) benötigte Übertragungskapazität ermittelt wird, indem das zu übertragende Signal (PR1, PR2, PR3) in einen Pufferspeicher eingeschrieben wird und die Bestimmung der benötigten Übertragungskapazität in Abhängigkeit vom Füllstand des Pufferspeichers erfolgt, jedem der zu übertragenden Signale (PR1, PR2, PR3) die benötigte oder auf Grund einer Zwischenspeicherung reduzierte oder erhöhte Übertragungskapazität zugewiesen wird, eine Synchronisationsinformation über die zu dem zu übertragenden Signal (PR1, PR2, PR3) gehörenden Daten erzeugt wird und diese Information in einem speziellen Übertragungskanal übertragen wird.

2. Verfahren nach Anspruch 1,
wobei die von jedem zu übertragenden Signal (PR1, PR2, PR3) ermittelte und in Anspruch genommene Übertragungskapazität dem Programmanbieter in Rechnung gestellt wird.

3. Verfahren nach Anspruch 1 oder 2,
wobei eines oder mehrere der zu übertragenden Signale (PR1, PR2, PR3) senderseitig verschlüsselt und empfängerseitig entschlüsselt werden.

4. Verfahren nach einem der Ansprüche 1 bis 3,
wobei die empfängerseitige Entschlüsselung nur nach Eingabe einer Codezahl oder nach einer Freischaltung durch den Sender erfolgt.

5. Verfahren nach einem der Ansprüche 1 bis 4,
wobei die Zuordnung der Übertragungskapazität zu den zu übertragenden Signalen (PR1, PR2, PR3) bitgenau erfolgt.

6. Sender zur OFDM-Signalübertragung, mit einer zugewiesenen Übertragungskapazität bei einem rahmenorientierten Mehrkanalübertragungsverfahren für digitale Audio- und/oder Videosignale, mit einem Zwischenspeicher für zu übertragende Signale (PR1, PR2, PR3), wobei der Sender Mittel zur Ermittlung der von den zu übertragenden Signalen (PR1, PR2, PR3) benötigten Übertragungskapazität aufweißt, wobei der Sender eine Steuereinheit zur Zuweisung der von den zu übertragenden Signalen (PR1, PR2, PR3) zur Übertragung benutzten Datensymbolen und/oder Trägerfrequenzen in Abhängigkeit vom Füllstand des Zwischenspeichers und der ermittelten Übertragungskapazität aufweist, der Sender Mittel zur Erzeugung einer Synchronisations-Information über die zu einem zu übertragenden Signal (PR1, PR2, PR3) gehörenden Daten aufweist und der Sender derart ausgestaltet ist, dass er diese Information in einem speziellen Übertragungskanal überträgt.

7. Sender nach Anspruch 6,
wobei der Sender Mittel aufweist, um die für jedes zu übertagende Signal (PR1, PR2, PR3) benötigte Übertragungskapazität dem Programmanbieter in Rechnung zu stellen.

8. Sender nach Anspruch 6 oder 7,
wobei der Sender Mittel zur Verschlüsselung der zu übertragenden Signale (PR1, PR2, PR3) aufweist.

9. Sender nach einem der Ansprüche 6 bis 8,
wobei der Sender Mittel zur bitgenauen Zuweisung der Übertragungskapazität aufweist.

## Claims

1. Method for the adaptive determination of the transmission capacity assigned to an OFDM transmission signal in a frame-oriented multi-channel transmission method for audio and/or video signals, the transmission capacity required for each signal (PR1, PR2, PR3) to be transmitted being determined in the transmitter in that the signal (PR1, PR2, PR3) to be transmitted is written into a buffer memory and the required transmission capacity is determined in dependence on the occupancy level of the buffer memory, the required transmission capacity, or that reduced or increased on the basis of an intermediate storage in memory, being assigned to each of the signals (PR1, PR2, PR3) to be transmitted, synchronization information being generated concerning the data belonging to the signal (PR1, PR2, PR3) to be transmitted and this information being transmitted in a special transmission channel.

2. Method according to Claim 1,
the transmission capacity determined for and required by the signal (PR1, PR2, PR3) to be transmitted being charged to the programme provider.

3. Method according to either of Claims 1 or 2,
one or more of the signals (PR1, PR2, PR3) to be transmitted being encrypted at the transmitting side and decrypted at the receiving side.

4. Method according to any one of Claims 1 to 3,
the decryption at the receiving side being effected only following input of a code number or following clearance by the transmitter.

5. Method according to any one of Claims 1 to 4,
the transmission capacity being assigned to the signals (PR1, PR2, PR3) to be transmitted with bit precision.

6. Transmitter for OFDM signal transmission, with an assigned transmission capacity in a frame-oriented multi-channel transmission method for digital audio and/or video signals, with an intermediate memory for signals (PR1, PR2, PR3) to be transmitted, the transmitter having means for determining the transmission capacity required by the signals (PR1, PR2, PR3) to be transmitted, the transmitter having a control unit for assigning the data symbols and/or carrier frequencies used by the signals (PR1, PR2, PR3) to be transmitted for the purpose of transmission in dependence on the occupancy level of the intermediate memory and the determined transmission capacity, the transmitter having means for generating synchronization information concerning the data belonging to a signal (PR1, PR2, PR3) to be transmitted and the transmitter being designed in such a way that it transmits this information in a special transmission channel.

7. Transmitter according to Claim 6,
the transmitter having means for charging to the programme provider the transmission capacity required for each signal (PR1,PR2, PR3) to be transmitted.

8. Transmitter according to either of Claims 6 or 7,
the transmitter having means for encrypting the signals (PR1, PR2, PR3) to be transmitted.

9. Transmitter according to any one of Claims 6 to 8,
the transmitter having means for assigning the transmission capacity with bit precision.

## Revendications

1. Procédé de détermination adaptative d'une capacité de transmission affectée d'un canal de transmission OFTM, dans un procédé de transmission à canaux multiples, accès sur les trames, pour des signaux audio et/ou vidéo, selon lequel la capacité de transmission nécessaire pour chaque signal à transmettre (PR1, PR2, PR3) est déterminée dans l'émetteur, par le fait que le signal à transmettre (PR1, PR2, PR3) est inscrit dans une mémoire tampon, la détermination de la capacité nécessaire de transmission est réalisée en fonction de l'état de remplissage de la mémoire tampon, la capacité de transmission nécessaire ou réduite ou accrue sur la base d'une mémorisation intermédiaire est affectée à chacun des signaux à transmettre (PR1, PR2, PR3), une information de synchronisation concernant les données appartenant au signal à transmettre (PR1, PR2, PR3) est produire et cette information est transmise dans un canal de transmission particulier.

2. Procédé selon la revendication 1, selon lequel la capacité de transmission déterminée par chaque signal à transmettre (PR1, PR2, PR3) et sollicitée est portée au compte du fournisseur de programmes.

3. Procédé selon la revendication 1 ou 2, selon lequel un ou plusieurs des signaux à transmettre (PR1, PR2, PR3) sont codés côté émetteur et sont décodés côté récepteur.

4. Procédé selon l'une des revendications 1 à 3, selon lequel le décodage côté récepteur s'effectue uniquement après introduction d'un nombre de codes ou après libération par l'émetteur.

5. Procédé selon l'une des revendications 1 à 4, selon lequel l'association de la capacité de transmission aux signaux à transmettre (PR1, PR2, PR3) s'effectue d'une manière précise au niveau des bits.

6. Emetteur pour la transmission de signaux OFDM, comportant une capacité de transmission affectée dans le cas d'un procédé de transmission à canaux multiples, axé sur les trames, pour des signaux audio et/ou vidéo, comportant une mémoire intermédiaire pour les signaux à transmettre (PR1, PR2, PR3), dans lequel l'émetteur comporte des moyens pour déterminer la capacité de transmission nécessaire pour la détermination des signaux à transmettre (PR1, PR2, PR3), l'émetteur comporte une unité de commande pour l'affectation des symboles de données et/ou des fréquences porteuses, utilisés pour la transmission par les signaux à transmettre (PR1, PR2, PR3), en fonction de l'état de remplissage de la mémoire intermédiaire et de la capacité de transmission déterminée, l'émetteur comporte des moyens pour produire une information de synchronisation concernant les données faisant partie d'un signal à transmettre (PR1, PR2, PR3) et l'émetteur est agencé de telle sorte qu'il transmet cette information dans un canal de transmission spécial.

7. Emetteur selon la revendication 6, dans lequel l'émetteur comporte des moyens pour porter au compte du fournisseur de programmes la capacité de transmission nécessaire pour chaque signal à transmettre (PR1, PR2, PR3).

8. Emetteur selon la revendication 6 ou 7, dans lequel l'émetteur comporte des moyens pour coder les signaux à transmettre (PR1, PR2, PR3).

9. Emetteur selon l'une des revendications 6 à 8, dans lequel l'émetteur comporte des moyens pour affecter, de façon précise au niveau des bits, la capacité de transmission.
